# EUROPÄISCHE PATENTSCHRIFT

(11) **EP 1 354 763 B1**
(45) Veröffentlichungstag und Bekanntmachung des Hinweises auf die Patenterteilung: **12.12.2007**
(21) Anmeldenummer: 03004130.5
(22) Anmeldetag: 26.02.2003
(51) Int. Cl.: B60Q 1/14, H01H 25/04

(54) **Schalthebel für einen Lenkstockschalter eines Kraftfahrzeuges**
Switch lever for a steering column switch of a vehicle
Levier pour commutateur de colonne de direction de véhicule

(30) Priorität: 16.03.2002 DE 10211805
(43) Veröffentlichungstag der Anmeldung: 22.10.2003
(73) Patentinhaber: Delphi Technologies Inc., Troy, MI 48007 (US)
(72) Erfinder: Dietrich, Andreas, 55452 Guldental (DE); Besier, Holger, 65375 Oestrich-Winkel (DE)
(74) Vertreter: Becker, Bernd

(56) Entgegenhaltungen:
- EP-A- 0 160 905
- EP-A- 0 200 175
- DE-A1- 19 701 950
- FR-A- 2 796 201

## Beschreibung

Die Erfindung bezieht sich auf einen Schalthebel für einen Lenkstockschalter eines Kraftfahrzeuges, insbesondere für einen Wischer-/Wascherschalter, dessen Fuß in einem Schaltergehäuse schwenkbar gelagert werden kann und dessen Griffstück mindestens einen mit dem Bordnetz koppelbaren, als Drehschalter ausgebildeten Einzelschalter mit einem Betätigungselement aufweist, der elektrisch mit einem in den Fuß eingesetzten, an das Bordnetz anschließbaren Kontaktbereich verbunden ist.

Aus der Praxis ist ein Schalthebel für einen Lenkstockschalter eines Kraftfahrzeuges bekannt, in dessen Griffstück Einzelschalter integriert sind, die zur Kopplung mit einem Bordnetz über eine entsprechende Verdrahtung mit einer Leiterplatte des Lenkstockschalters in Verbindung stehen, wobei der Schalthebel in einem Schaltergehäuse kreuzgelenkig gelagert ist. Ein derartiger Schalthebel muss in seinem Inneren einen entsprechenden Freiraum zu Verfügung stellen, um die Durchführung von Verbindungskabeln zu ermöglichen, was eine relativ große Dimensionierung des Schalthebels bedingt. Im Weiteren bringen die Verbindungskabel sowohl innerhalb des Schalthebels als auch die Kopplung der Verbindungskabel des Schalthebels mit der zugeordneten Leiterplatte einen erheblichen Montageaufwand mit sich.

Die den nächstliegenden Stand der Technik bildende FR-A-2 796 201 und die EP 0 160 905 A1 offenbaren jeweils einen Schalthebel für einen Lenkstockschalter eines Kraftfahrzeuges, dessen Fuß in einem Schaltergehäuse schwenkbar gelagert werden kann und dessen Griffstück mindestens einen mit dem Bordnetz koppelbaren, als Drehschalter ausgebildeten Einzelschalter aufweist, der über eine den Schalthebel durchragende gedruckte Leiterplatte elektrisch mit einem in den Fuß eingesetzten, an das Bordnetz anschließbaren Kontaktbereich verbunden ist. Im Weiteren ist aus der DE 197 01 950 A1 ein Stanzgitter bekannt, mit dem die Nachteile einer gedruckten Leiterplatte vermieden werden.

Es ist Aufgabe der Erfindung, einen Schalthebel der eingangs genannten Art zu schaffen, der bei einer zuverlässigen Funktionsweise kompakt und kostengünstig zu fertigen ist.

Erfindungsgemäß wird die Aufgabe durch die kennzeichnenden Merkmale des Anspruchs 1 gelöst.

Das Stanzgitter stellt ein elektrisches Verbindungselement für einen oder mehrere Einzelschalter mit dem Bordnetz dar, das relativ viele Schaltfunktionen überträgt und dabei einen geringen Einbauraum benötigt, weshalb der Schalthebel kompakt aufgebaut ist. Ferner ist es bei der Montage des Schalthebels nicht erforderlich, eine Vielzahl einzelner Verbindungskabel in dem Schalthebel zu installieren. Vielmehr ist mit dem einstückigen Stanzgitter eine kostengünstige Montage des Schalthebels zu bewerkstelligen. Die von Schaltkontakten des Drehschalters beaufschlagten Kontaktzonen umfassen die Festkontakte des Drehschalters, der beispielsweise zur Einstellung eines Intervalls für ein Frontwischen dient. Durch die Umspritzung ist das Stanzgitter stabilisiert und gegenüber dem Schalthebel elektrisch isoliert. Darüberhinaus ist es aufgrund des mit der Umspritzung ausgebildeten Trägerachsstummels nicht erforderlich, zusätzliche Lagerelemente für das Betätigungselement des Drehschalters innerhalb des Schalthebels zu positionieren.

Zur Vereinfachung der Montage des Schalthebels in dem Schaltergehäuse umfasst der Kontaktbereich mehrere Kontaktzungen zur Beaufschlagung von Kontakten des Bordnetzes beim Einsetzen des Schalthebels in das Schaltergehäuse. Die Kontaktzungen sind somit wie Steckkontakte eines Steckers ausgebildet, so dass eine elektrische Verbindung zwischen dem Stanzgitter und somit den Einzelschaltern beim Einstecken des Fußes des Schalthebels in eine entsprechende Buchse erfolgt. Die Buchse selbst kann beispielsweise Bestandteil eines beim Verschwenken des Schalthebels zu beaufschlagenden Drehschaltgliedes sein.

Vorzugsweise ist das Stanzgitter mit in Richtung des freien Endes des Schalthebels weisenden Steckkontakten für einen als Drucktastenschalter ausgebildeten Einzelschalter versehen. Die elektrische Verbindung des Drucktastenschalters, der beispielsweise für die Schaltfunktion Frontwaschen vorgesehen ist, wird durch einfaches Aufstecken desselben bewerkstelligt, wobei der Drucktastenschalter selbstverständlich eine zu den Steckkontakten korrespondierende Kontaktbuchse umfasst.

Zur Reduzierung der Anzahl der für die Übertragung der Schaltfunktionen der Einzelschalter zum Bordnetz erforderlichen Verbindungspfade sind vorteilhafterweise Kontaktbahnen des Stanzgitters zwischen dem Kontaktbereich und den Kontaktzonen widerstandscodiert.

Zur Bauteilreduzierung ist vorteilhafterweise die Umspritzung mit mehreren kreisbogenförmig angeordneten Rastungen für die Schaltstellungen des Drehschalters versehen, wobei das Betätigungselement eine abgewinkelte mit den Rastungen zusammenwirkende Blattfeder trägt.

Zweckmäßigerweise sind die Schaltkontakte des Betätigungselementes als Kontaktfedern ausgebildet. Die Kontaktfedern schleifen bei einer Beaufschlagung des Betätigungselementes des Drehschalters zum Öffnen und Schließen von Stromkreisen über die zugeordneten Kontaktfelder des Stanzgitters.

Um eine relativ schnelle Montage des Drucktastenschalters in einer definierten Position zu gewährleisten, umfasst vorteilhafterweise die Umspritzung des Stanzgitters eine einstückige Aufnahme für den in Richtung des freien Endes des Schalthebels weisenden Drucktastenschalter.

Bevorzugt weist das Griffstück ein Gehäuseunterteil zur Abdeckung und Halterung des Stanzgitters auf. Das Gehäuseunterteil verschließt das Griffstück in dem für den Bediener zugängigen Bereich.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im Folgenden anhand eines Ausführungsbeispieles unter Bezugnahme auf die zugehörigen Zeichnungen näher erläutert. Es zeigen:

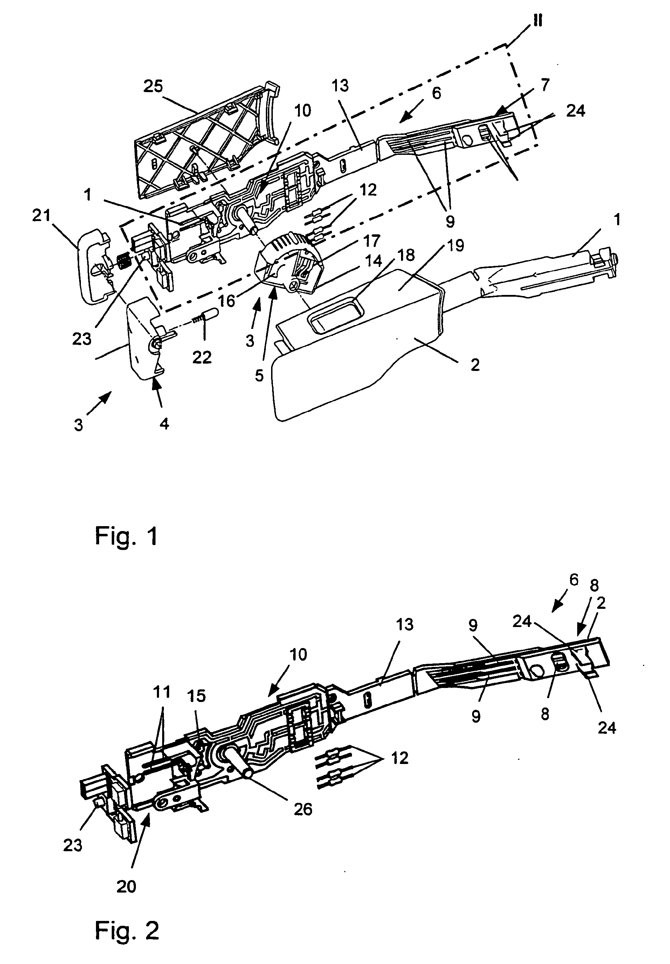

- Fig.1: eine Explosionsdarstellung eines erfindungsgemäßen Schalthebels,
- Fig.2: eine perspektivische Darstellung einer Einzelheit II nach Fig. 1 und

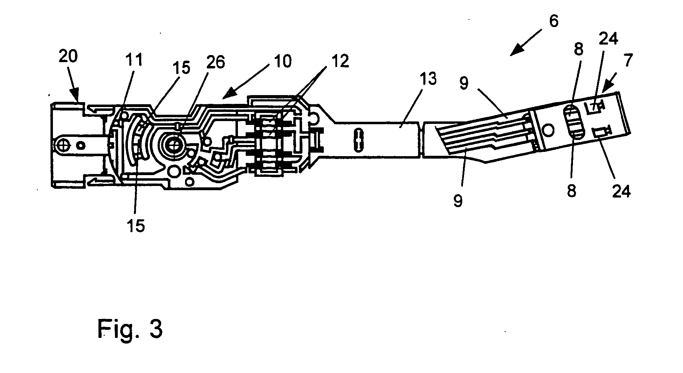

- Fig.3: eine Draufsicht auf die Einzelheit II nach Fig. 1.

Der Schalthebel eines Lenkstockschalters für ein Kraftfahrzeug umfasst einen Fuß 1, dessen freies Ende in einem nicht dargestellten Schaltergehäuse kreuzgelenkig gelagert ist. An dem Fuß 1 schließt sich einstückig ein Griffstück 2 an, das zur Aufnahme von zwei Einzelschaltern 3 dient, von denen der eine als Drucktastenschalter 4 und der andere als Drehschalter 5 ausgebildet ist. Die beiden Einzelschalter 3 sind über ein gemeinsames Stanzgitter 6, das den Schalthebel durchragt, mit einem Bordnetz des Kraftfahrzeuges verbunden.

Das Stanzgitter 6 weist einen dem Fuß 1 des Schalthebels zugeordneten Kontaktbereich 7 mit Kontaktzungen 8 auf, die beim Einsetzen des Schalthebels in das Schaltergehäuse dem Bordnetz zugeordnete Kontakte beaufschlagen und damit eine elektrische Verbindung zwischen den Einzelschaltern 3 und dem Bordnetz herstellen. Von den Kontaktzungen 8 erstrecken sich einstückig damit verbundene Kontaktbahnen 9 des Stanzgitters 6 in Richtung des freien Endes des Schalthebels. Die Kontaktbahnen 9 münden sowohl in eine dem Drehschalter 5 zugeordnete Kontaktzone 10 als auch in Steckkontakte 11 für den Drucktastenschalter 4. Zur Widerstandscodierung des Stanzgitters 6, die zu einer Reduzierung der Kontaktbahnen 9 gegenüber den Schaltstellungen der Einzelschalter 3 führt, sind zwischen den Kontaktbahnen 9 und der Kontaktzone 10 sowie den Steckkontakten 11 Widerstände 12 angeordnet. Das Stanzgitter 6 ist im Wesentlichen unter Aussparung der Kontaktzone 10 und dem Kontaktbereich 7 mit einem Kunststoff umspritzt.

Mit der Umspritzung 13 ist im Zentrum der Kontaktzone 10 ein sich senkrecht zu der Kontaktzone 10 erstreckender Trägerachsstummel 26 zur Lagerung eines Betätigungselementes 14 des Drehschalters 5 einstückig ausgeformt. Weiterhin sind in der Umspritzung 13 konzentrisch zum Trägerachsstummel 26 mit dem Betätigungselement 14 zusammenwirkende Rastungen 15 kreisbogenförmig ausgebildet, wobei das Betätigungselement 14 mit einer abgewinkelten Blattfeder 16 versehen ist, deren Abwinklung in einer verrasteten Schaltposition in einer zugeordneten Rastung 15 einliegt. Darüber hinaus trägt das Betätigungselement 14 Kontaktfedern 17 zur Beaufschlagung der Kontaktzonen 10. Zur Beaufschlagung von einem Bediener ragt ein Segment des Betätigungselementes 14 durch eine Aussparung 18 in einer seitlichen Wandung 19 des Griffstückes 2 nach aussen.

Um den an der freien Stirnseite des Griffstückes 2 angeordneten Drucktastenschalter 4 positionsgenau zu fixieren, ist an der Umspritzung 13 des Stanzgitters 6 eine einstückige Aufnahme 20 vorgesehen, in die der Drucktastenschalter 4 eingesetzt wird, wobei beim Einsetzen des Drucktastenschalters 4 über die Steckkontakte 11 sowie das Stanzgitter 6 ein elektrischer Kontakt mit dem Bordnetz hergestellt wird. Der Drucktastenschalter 4 ist als separater Schalter ausgebildet und umfasst neben einer Drucktaste 21 mit einer federnden Rückstellung 22 auch einen Mikroschalter 23.

Zur Halterung des Stanzgitters 6 an dem Schalthebel sind an dem dem Fuß 1 zugeordneten Ende der Umspritzung 13 des Stanzgitters 6 zwei gegenüberliegende sowie zueinander beabstandete Klipsarme 24 angeordnet, die mit dem Fuß 1 zusammenwirken. Im Weiteren ist das Griffstück 2 mit einem Gehäuseunterteil 25 zur Abdeckung und Halterung des Stanzgitters 6 versehen.

## Patentansprüche

1. Schalthebel für einen Lenkstockschalter eines Kraftfahrzeuges, insbesondere für einen Wischer-/Wascherschalter, dessen Fuß (1) in einem Schaltergehäuse schwenkbar gelagert werden kann und dessen Griffstück (2) mindestens einen mit dem Bordnetz koppelbaren, als Drehschalter (5) ausgebildeten Einzelschalter (3) mit einem Betätigungselement (14) aufweist, der elektrisch mit einem in den Fuß (1) eingesetzten, an das Bordnetz anschließbaren Kontaktbereich (7) verbunden ist, **dadurch gekennzeichnet, dass** der Drehschalter (5) über ein den Schalthebel durchragendes Stanzgitter (6) mit dem Kontaktbereich (7) verbunden ist, wobei das Stanzgitter von Schaltkontakten des Drehschalters beaufschlagte Kontaktzonen aufweist, und wobei das Stanzgitter (6) zumindest unter Freilassung des Kontaktbereichs (7) sowie der Kontaktzonen (10) umspritzt ist und die Umspritzung (13) des Stanzgitters (6) im Bereich der Kontaktzonen (10) einen einstückig damit verbundenen Trägerachsstummel (26) zur Lagerung des Betätigungselementes (14) aufweist, wobei der Trägerachsstummel (26) im Wesentlichen senkrecht zu den Kontaktzonen (10) ausgerichtet ist.

2. Schalthebel nach Anspruch 1, **dadurch gekennzeichnet, dass** der Kontaktbereich (7) mehrere Kontaktzungen (8) zur Beaufschlagung von Kontakten des Bordnetzes beim Einsetzen des Schalthebels in das Schaltergehäuse umfasst.

3. Schalthebel nach Anspruch 1, **dadurch gekennzeichnet, dass** das Stanzgitter (6) mit in Richtung des freien Endes des Schalthebels weisenden Steckkontakten (11) für einen als Drucktastenschalter (4) ausgebildeten Einzelschalter (3) versehen ist.

4. Schalthebel nach einem der Ansprüche 1 bis 3, **dadurch gekennzeichnet, dass** Kontaktbahnen (9) des Stanzgitters (6) zwischen dem Kontaktbereich (7) und den Kontaktzonen (10) widerstandscodiert sind.

5. Schalthebel nach Anspruch 1, **dadurch gekennzeichnet, dass** die Umspritzung (13) mit mehreren kreisbogenförmig angeordneten Rastungen (15) für die Schaltstellungen des Drehschalters (5) versehen ist, wobei das Betätigungselement (14) eine abgewinkelte mit den Rastungen (15) zusammenwirkende Blattfeder (16) trägt.

6. Schalthebel nach Anspruch 1 oder 5, **dadurch gekennzeichnet, dass** die Schaltkontakte des Betätigungselementes (14) als Kontaktfedern (17) ausgebildet sind.

7. Schalthebel nach Anspruch 1, **dadurch gekennzeichnet, dass** die Umspritzung (13) des Stanzgitters (6) eine einstückige Aufnahme (20) für den in Richtung des freien Endes des Schalthebels weisenden Drucktastenschalter (4) umfasst.

8. Schalthebel nach einem der Ansprüche 1 bis 7, **dadurch gekennzeichnet, dass** das Griffstück (2) ein Gehäuseunterteil (25) zur Abdeckung und Halterung des Stanzgitters (6) aufweist.

## Claims

1. Switch lever for a steering column switch of a motor vehicle, in particular for a wiper/washer switch, of which the base (1) can be mounted pivotably in a switch housing and of which the gripping piece (2) comprises at least one individual switch (3) which is designed as a rotary switch (5) and can be coupled to the vehicle's electrical system and which has an actuating element (14) which is electrically connected to a contact region (7) inserted in the base (1) and connectable to the vehicle's electrical system, **characterised in that** the rotary switch (5) is connected to the contact region (7) by a pressed screen (6) extending through the switch lever, the pressed screen comprising contact zones which are acted upon by switching contacts of the rotary switch, and the pressed screen (6) being surrounded by injection moulding, at least leaving free the contact region (7) and the contact zones (10), and the injection-moulded surrounding (13) of the pressed screen (6) comprising in the region of the contact zones (10) a carrier axle stub (26) integrally connected thereto for mounting the actuating element (14), the carrier axle stub (26) being oriented substantially perpendicularly to the contact zones (10).

2. Switch lever according to claim 1, **characterised in that** the contact region (7) includes several contact blades (8) for acting on contacts of the vehicle's electrical system when the switch lever is inserted in the switch housing.

3. Switch lever according to claim 1, **characterised in that** the pressed screen (6) is provided with plug contacts (11) pointing in the direction of the free end of the switch lever, for an individual switch (3) designed as a pushbutton switch (4).

4. Switch lever according to any of claims 1 to 3, **characterised in that** contact paths (9) of the pressed screen (6) between the contact region (7) and the contact zones (10) are resistance-coded.

5. Switch lever according to claim 1, **characterised in that** the injection-moulded surrounding (13) is provided with several arcuately arranged latch portions (15) for the switching positions of the rotary switch (5), the actuating element (14) carrying an angled leaf spring (16) co-operating with the latch portions (15).

6. Switch lever according to claim 1 or 5, **characterised in that** the switching contacts of the actuating element (14) are designed as contact springs (17).

7. Switch lever according to claim 1, **characterised in that** the injection-moulded surrounding (13) of the pressed screen (6) includes a one-piece receptacle (20) for the pushbutton switch (4) pointing in the direction of the free end of the switch lever.

8. Switch lever according to any of claims 1 to 7, **characterised in that** the gripping piece (2) comprises a lower housing portion (25) for covering and supporting the pressed screen (6).

## Revendications

1. Levier de commutation pour un commutateur de colonne de direction d'un véhicule, en particulier pour un commutateur d'essuie-glace/de lave-glace, dont le pied (1) peut être monté à pivotement dans un boîtier de commutateur et dont la pièce de préhension (2) comporte au moins un commutateur individuel (3) qui est couplable au réseau de bord, est conformé en commutateur rotatif (5) et est muni d'un élément d'actionnement (14) et qui est relié électriquement à une région de contact (7) insérée dans le pied (1) et connectable au réseau de bord, **caractérisé en ce que** le commutateur rotatif (5) est relié à la région de contact (7) par l'intermédiaire d'une grille estampée (6) qui traverse le levier de commutation, la grille estampée comportant des zones de contact sollicitées par des contacts de commutation du commutateur rotatif, et la grille estampée (6) étant enrobée au moins en épargnant la région de contact (7) ainsi que les zones de contact (10), et l'enrobage (13) de la grille estampée (6) comportant dans la région des zones de contact (10) un bout d'axe porteur (26) relié d'un seul tenant à celui-ci pour recevoir l'élément d'actionnement (14), le bout d'axe porteur (26) étant orienté sensiblement perpendiculairement aux zones de contact (10).

2. Levier de commutation selon la revendication 1, **caractérisé en ce que** la région de contact (7) comprend plusieurs languettes de contact (8) pour solliciter des contacts du réseau de bord lors de l'insertion du levier de commutation dans le boîtier de commutateur.

3. Levier de commutation selon la revendication 1, **caractérisé en ce que** la grille estampée (6) est pourvue de contacts enfichables (11) orientés en direction de l'extrémité libre du levier de commutation pour un commutateur individuel (3) conformé en interrupteur à bouton poussoir (4).

4. Levier de commutation selon une des revendications 1 à 3, **caractérisé en ce que** des pistes de contact (9) de la grille estampée (6) entre la région de contact (7) et les zones de contact (10) sont codées par résistance.

5. Levier de commutation selon la revendication 1,
**caractérisé en ce que** l'enrobage (13) est pourvu de plusieurs crans de verrouillage disposés en arc de cercle (15) pour les positions de commutation du commutateur rotatif (5), l'élément d'actionnement (14) portant un ressort à lame coudé (16) coopérant avec les crans de verrouillage (15).

6. Levier de commutation selon la revendication 1 ou 5, **caractérisé en ce que** les contacts de commutation de l'élément d'actionnement (14) sont conformés en ressorts de contact (17).

7. Levier de commutation selon la revendication 1,
**caractérisé en ce que** l'enrobage (13) de la grille estampée (6) comprend un logement (20) faisant corps avec lui pour l'interrupteur à bouton poussoir (4) orienté en direction de l'extrémité libre du levier de commutation.

8. Levier de commutation selon une des revendications 1 à 7, **caractérisé en ce que** la pièce de préhension (2) comporte une partie inférieure de boîtier (25) pour recouvrir et maintenir la grille estampée (6).
